# FASCICULE DE BREVET EUROPEEN

(11) **EP 0 783 202 B1**
(45) Date de publication et mention de la délivrance du brevet: **31.10.2001**
(21) Numéro de dépôt: 96402924.3
(22) Date de dépôt: 30.12.1996
(51) Int. Cl.: H02K 41/03

(54) **Accélérateur pour actionneur linéaire**
Beschleuniger für Linearantrieb
Accelerator for a linear actuator

(30) Priorité: 29.12.1995 FR 9515703
(43) Date de publication de la demande: 09.07.1997
(73) Titulaire: ETAT FRANCAIS représenté par le DELEGUE GENERAL pour L'ARMEMENT, 75007 Paris (FR); DELEGATION GENERALE POUR L'ARMEMENT, BUREAU DE LA PROPRIETE INDUSTRIELLE D.R.E.T., 00460 Armées (FR)
(72) Inventeur: Amiet, Michel, 75015 Paris (FR); Lucidarme, Jean, 91700 Sainte-Geneviève-des-Bois (FR)

(56) Documents cités:
- EP-A- 0 004 995
- EP-A- 0 218 521
- EP-A- 0 291 638
- EP-A- 0 348 851
- FR-A- 2 198 299

## Description

La présente invention concerne notamment le domaine des actionneurs électriques linéaires synchrones à réluctance variable et a notamment pour objet un actionneur linéaire électrique, du type comprenant un stator et un piston, tout deux comportant des plaques disposées parallèlement au sens de déplacement du piston.

Il existe actuellement des actionneurs hydrauliques, pneumatiques ou électriques.

Parmi les actionneurs électriques, il existe déjà des actionneurs linéaires soit à réluctance variable pure, soit à réluctance variable hybride, (utilisation d'aimants pour l'excitation). Seulement, les actionneurs électriques ont une poussée beaucoup plus faibles que les actionneurs pneumatiques, ou hydrauliques. Il existe toutefois des actionneurs linéaires électriques avec une forte poussée utilisant des électroaimants, et dans lesquels, de par leur structure, l'effort de poussée est dû à la composante normale du champ magnétique. Toutefois, cette forte poussée n'est possible que sur de petites distances.

Ainsi, les actionneurs électriques ne peuvent concurrencer les actionneurs pneumatiques (et encore moins les actionneurs hydrauliques), parce que lorsqu'ils ont une poussée spécifique élevée, ils ne parcourent que des petites distances. Or il serait intéressant d'obtenir des actionneurs électriques ayant des capacités au moins semblables à celles des actionneurs pneumatiques car l'électricité, contrairement à l'air comprimé, permet des positionnements très précis et une grande souplesse dans la commande, donc le déplacement.

Dans le document FR 2 588 131, l'un des inventeurs décrit la structure et le fonctionnement d'une machine tournante discoïde ainsi que plusieurs structures de motifs électromagnétiques associés à des aimants permanents, permettant l'utilisation d'un moteur synchrone à réluctance variable. Cette machine génère un mouvement du type rotatif et ne connaît donc pas les problèmes des actionneurs linéaires que les inventeurs veulent résoudre, à savoir, générer une forte poussée ou accélération sur de grandes longueurs.

Dans le document FR 2 588 133, l'un des inventeurs décrit la structure et le fonctionnement d'un actionneur linéaire synchrone à réluctance variable, capable de poussées importantes sur de grandes longueurs.

Cet actionneur, à reluctance variable pure, comporte un stator et un piston, ce dernier comprenant un noyau portant des lames ferromagnétiques minces, parallèles entre elles et parallèles au sens de déplacement, et fractionnées chacune dans le sens longitudinal en plots avec un pas déterminé p, le circuit ferromagnétique de chaque enroulement comportant également plusieurs lames minces alternant avec celles portées par le noyau et également fractionnées en plots au même pas p que celui des plots des lames du noyau. Cet actionneur présente cependant les inconvénients suivants :
- sa structure ne permet pas un fonctionnement avec des jeux d'entrefer importants, si ce n'est au détriment des performances,
   - les plots placés aux extrémités d'une lame subissent d'importants efforts perpendiculaires au déplacement. Ces mouvements parasites, perpendiculaires au mouvement désiré, rendent la lame instable. Ce phénomène est appelé effet de bout.

Pour pallier cet inconvénient et conserver des jeux d'entrefer les plus faibles possibles, les inventeurs ont conçu des actionneurs à lames tels que les plots des lames mobiles et ceux des plaques fixes frottent les uns contre les autres. Mais de tels actionneurs s'usent rapidement, chauffent, et sont bruyants.

De plus, pour avoir un actionneur linéaire électrique avec une poussée régulière, il est recommandé d'utiliser un actionneur à réluctance variable hybride (actionneur possédant des aimants permanents).

Or il est difficile de fabriquer des dispositifs lamellaires possédant des aimants permanents alternés et alignés avec d'autres matériaux.

Par ailleurs, on connaît les brevets FR2198299 et EP4995 qui décrivent un actionneur linéaire électrique à réluctance variable, du type comprenant un stator et un piston comportant respectivement des premières plaques et des secondes plaques se présentant sous la forme de dents, ces plaques comportant chacune principalement deux faces latérales et une face supérieure disposées parallèlement au sens de déplacement du piston, ces plaques étant disposées radialement et inscrites respectivement dans une première et une seconde matrice tubulaire, ces premières et secondes matrices tubulaires étant disjointes, la première matrice étant délimitée par la base et par la face supérieure des premières plaques et la seconde matrice étant délimitée par la base et par la face supérieure des deuxièmes plaques, les faces supérieures des premières et deuxièmes plaques étant séparées par un entrefer.

Ces actionneurs ont une poussée spécifique faible.

L'invention a donc pour but d'obtenir un actionneur électrique du type comportant un stator et un piston, ayant des propriétés mécaniques comparables aux actionneurs pneumatiques c'est-à-dire possédant une forte poussée ou accélération sur une distance importante, ne présentant pas d'effet de bout ni des frottements importants lors du déplacement du piston, et dont la réalisation est simple.

Selon l'invention, un actionneur linéaire électrique synchrone linéaire électrique synchrone à réluctance variable, du type comprenant un stator et un piston, comportant respectivement des premières et deuxièmes plaques, ces plaques comportant chacune principalement deux faces latérales et une face supérieure disposées parallèlement au sens de déplacement du piston, ces plaques étant disposées radialement et inscrites respectivement dans une première et une seconde matrice, caractérisé en ce que les première et deuxième matrices comportent une partie commune de forme tubulaire dans laquelle les plaques (3) et (9) sont disposées de manière alternée et les surfaces latérales des plaques du piston sont séparées des surfaces latérales des plaques (3) du stator par un entrefer (12).

Ainsi, un actionneur selon l'invention est du type polyentrefers et les surfaces actives sont constituées par les surfaces latérales des plaques.

De plus, un actionneur linéaire électrique synchrone à réluctance variable hybride selon l'invention est du type comprenant un stator et un piston, tous deux comportant des plaques disposées parallèlement au sens de déplacement du piston, les unes étant ferromagnétiques et fractionnées chacune dans le sens longitudinal en dents avec un pas déterminé p, les autres étant non ferromagnétiques, alternant avec les plaques ferromagnétiques et comportant des aimants régulièrement répartis, et est caractérisé en ce que les plaques du stator, et du rotor sont disposées selon une géométrie cylindrique, les surfaces latérales des dents étant séparées des surfaces latérales des plaques non ferromagnétiques adjacentes par un entrefer.

Selon une caractéristique additionnelle, la polarité des aimants d'un même coté d'une plaque les renfermant est alternée et, pour chacun d'entre eux normale au plan longitudinal de cette plaque, les éléments de même polarité étant disposés selon un pas égal à p.

Selon une autre caractéristique, le piston comporte un axe en matériau amagnétique portant des plaques ferromagnétiques dentées, le stator comportant un enroulement et des plaques non ferromagnétiques, alternant avec les plaques ferromagnétiques du piston et comportant des aimants régulièrement répartis.

Selon une caractéristique additionnelle, les dents d'une branche du piston sont décalées par rapport à celles des branches adjacentes du piston.

Selon une autre caractéristique, le stator comporte n éléments statoriques décalés dans le sens longitudinal de p/n et dont l'alimentation des enroulements est déphasée de T/n.

Selon une autre caractéristique, l'actionneur comporte des moyens de guidage du piston en translation et en rotation, ces moyens pouvant comprendre au moins un bras solidaire du piston, et des roulements à billes solidarisés au stator par des moyens de supportage.

Selon une autre caractéristique, le stator comporte un enroulement et des plaques ferromagnétiques dentées, le piston comportant des plaques non ferromagnétiques, alternant avec les plaques ferromagnétiques et comportant des aimants régulièrement répartis.

Selon une caractéristique particulière de l'invention, l'actionneur est appliqué à un lanceur électrique, le piston constituant alors un projectile.

D'autres avantages et caractéristiques de la présente invention apparaîtront dans la description d'un mode particulier de réalisation de l'invention, au regard des figures annexées parmi lesquelles :
- la figure 1 montre un schéma du stator,
- la figure 2 présente un schéma d'une plaque du stator
- la figure 3 représente un schéma du piston
- sur la figure 4 sont représentées les principales pièces constitutives du piston.
- la figure 5 montre un schéma simplifié d'une coupe transversale de l'actionneur.

Un actionneur électrique selon l'invention est composé d'une partie fixe 1, appelé stator ou chemise et d'une partie mobile 2, appelée piston, coulissant dans le stator.

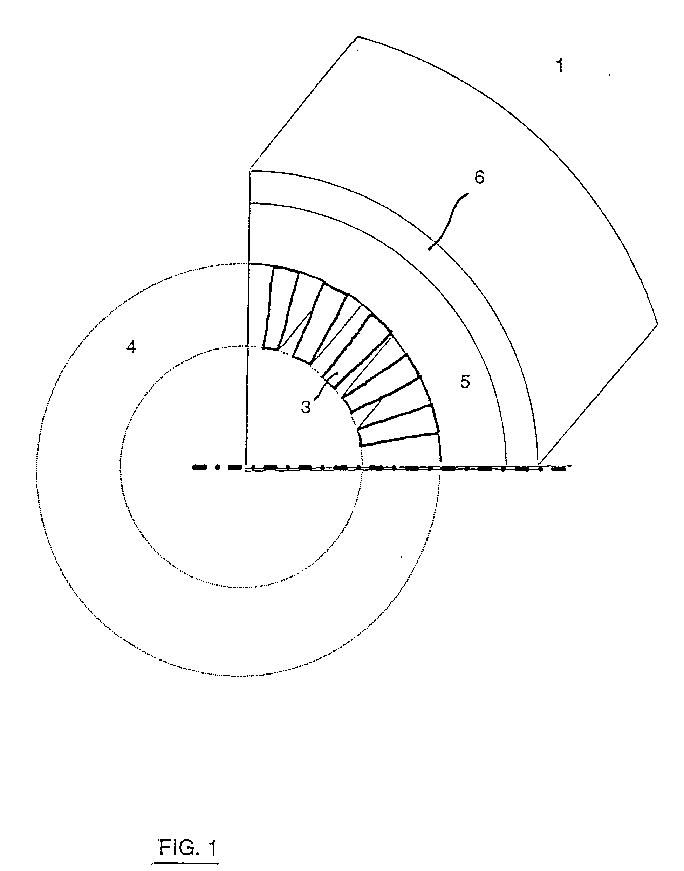

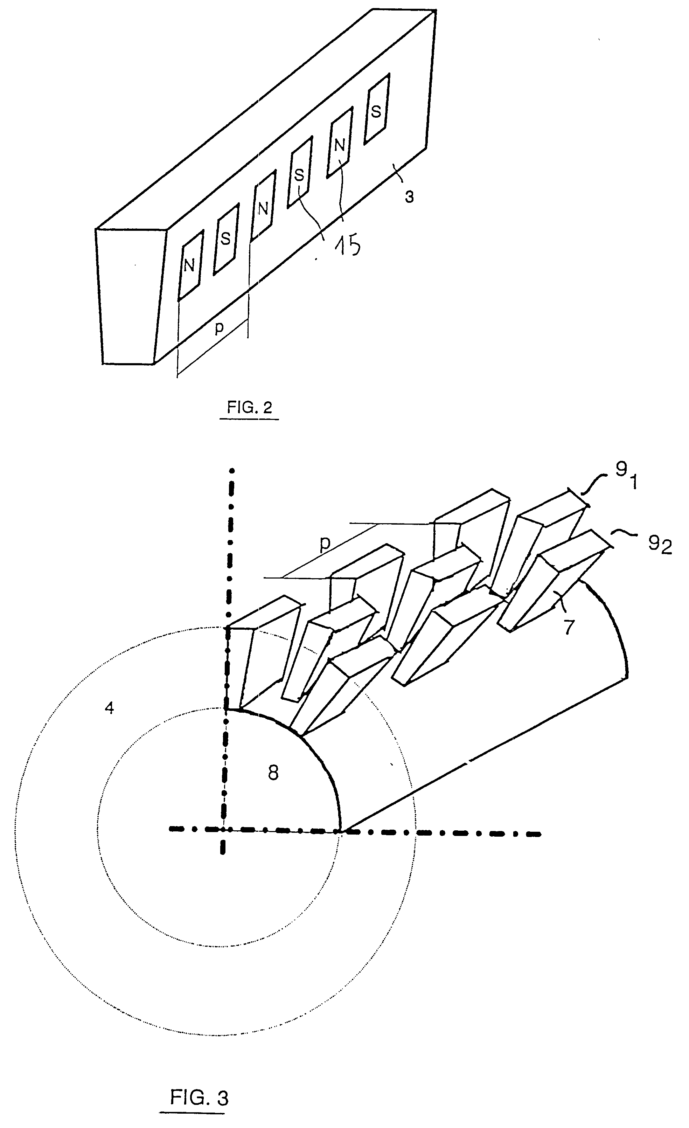

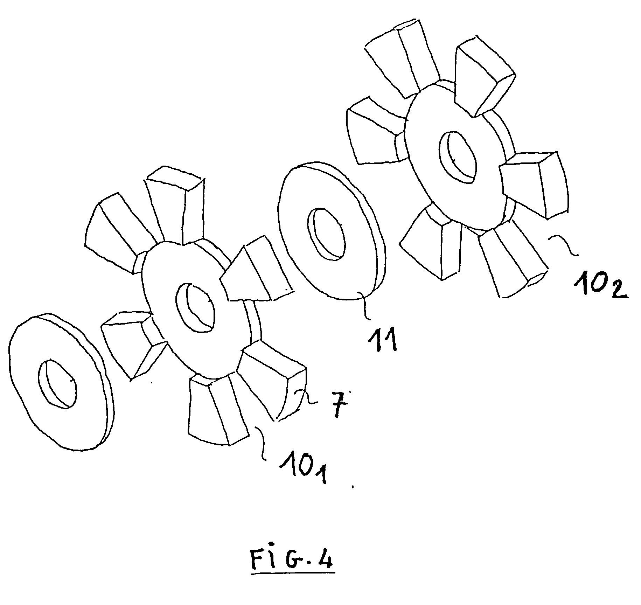

Comme montré à la figure 1, le stator 1 est composé d'un ensemble de plaques 3 d'égales longueurs en matériau non ferromagnétiques. Ces plaques 3 sont disjointes et régulièrement réparties selon une matrice 4 de forme tubulaire dont l'axe correspond avec celui du piston, et dont l'épaisseur correspond à la hauteur des plaques. Ces plaques ont une section transversale trapézoïdale.

Ces plaques 3 sont entourées par un enroulement 5 qui engendre un champ magnétique induit. Cet enroulement est lui-même entouré par une carcasse ferromagnétique 6.

L'ensemble constitué par les plaques 3, l'enroulement 5 et la carcasse 6 est fixé, à chacune de ses deux extrémités, à une flasque ferromagnétique, non représentée, en forme de couronne. Cette géométrie permet au piston de coulisser à l'intérieur de ces éléments.

Comme représenté sur la figure 2, des aimants 15 sont insérés dans les plaques 3 formant la chemise de telle façon que dans le sens longitudinal correspondant au sens de déplacement du piston, la polarité des aimants soit alternée. Ainsi la polarité des aimants est normale aux plans longitudinaux des plaques.

La distance séparant, dans le sens longitudinal, deux aimants de même polarité défini le pas p de l'actionneur.

L'insertion peut se faire par collage dans des trous prédécoupés, par moulage ou tout autre moyen.

L'enroulement 5 est associé à un circuit d'alimentation pouvant comporter une source de courant continu et un hacheur fournissant à l'enroulement des impulsions cycliques synchrones avec le déplacement, le hacheur pouvant être commandé par un capteur de déplacement du piston.

Le piston 2, présenté à la figure 3, a la forme d'une étoile à plusieurs branches. Chaque branche de l'étoile est composée par des dents 7 agencées selon le pas p de l'actionneur et dont la longueur (côté dans la direction du mouvement du piston) est légèrement inférieure au pas p, par exemple de l'ordre de 80% du pas. L'écart d entre deux dents successives est donc, dans cet exemple, de l'ordre de 20% du pas p.

Les dents 7, en matériau ferromagnétique, sont fixées sur un axe 8 en matériau de préférence amagnétique, voire en matière isolante surtout si le piston est destiné à avoir des mouvements rapides.

De plus, les dents 7 de deux branches voisines 9₁ et 9₂, ne sont pas en vis à vis mais décalées de telle sorte que le centre de symétrie d'une dent 7 de la branche 9₁ soit en vis à vis avec le centre d'un intervalle entre deux dents consécutives de la branche 9₂. On obtient ainsi une structure de dents en quinconce.

La distance entre deux branches consécutives 9₁ et 9₂ est légèrement supérieure à l'épaisseur d'une plaque 3 du stator, constituant ainsi un jeu d'entrefers, qui peut être important, en l'occurrence de l'ordre du mm

Ainsi constitué, le piston 2 peut coulisser à l'intérieur du stator 1.

Comme montré sur la figure 4, la structure de dents en quinconce peut être obtenue avantageusement par l'assemblage d'éléments identiques 10₁ et 10₂ ayant une forme de roue dentée, ces roues comportant deux fois moins de dents 7 que le piston ne comporte de branches 9. La distance entre deux branches voisines 9₁ et 9₂ d'un même élément 10₁ ou 10₂, est égale à la somme de la largeur d'une dent, de deux fois l'épaisseur des plaques 3 du stator 1 et des jeux d'entrefers.

Le piston 2 est réalisé en fixant sur un axe 11 une succession d'éléments 10₁ et 10₂, ces éléments 10₁ et 10₂ étant disposés de telle façon que le centre de symétrie d'une dent 7 du premier élément 10₁ soit en vis à vis avec le centre de symétrie d'un espace séparant deux dents successives de l'élément 10₂. Le décalage longitudinal entre les dents 7 de deux branches consécutives 9₁ et 9₂, correspondant respectivement aux dents des éléments est réalisé à l'aide d'une rondelle 11.

Le problème du blocage des éléments 10₁ et 10₂ en rotation sur l'axe 8 est résolu par simple serrage l'axe 8 comportant un épaulement et étant taraudé pour recevoir un écrou.

Les éléments 10₁ et 10₂ peuvent, par exemple, être réalisés par moulage.

La longueur du piston 2 est évidemment supérieure à celle du stator 1, et plus exactement celle du cylindre creux limité par les deux flasques.

Pour faciliter la translation du piston 2 par rapport au stator 1, il peut être utilisé des douilles à billes, placées entre le stator et le piston, hors du cylindre délimité par les flasques.

Le positionnement angulaire du piston 2 par rapport au stator 1 peut être avantageusement résolu par l'adoption de bras de guidage lié au piston et coulissant dans des coulisses réglables fixées au stator et comportant des roulements à billes

Sans cette possibilité de positionnement, le stator et le piston se colleraient l'un à l'autre.

Ainsi, dans un tel actionneur électrique, les plaques du stator ont, de par leur distribution cylindrique, toutes le même environnement, ce qui élimine tout effet de bout et facilite le positionnement angulaire du fait de la possibilité d'utiliser des jeux d'entrefer importants.

Pour obtenir le fonctionnement d'un tel piston, il suffit d'alimenter l'enroulement 5 par un courant électrique dont l'intensité est du type créneau. Il se créé ainsi un champ magnétique synchrone qui est la source d'une force faisant translater le piston par rapport au stator.

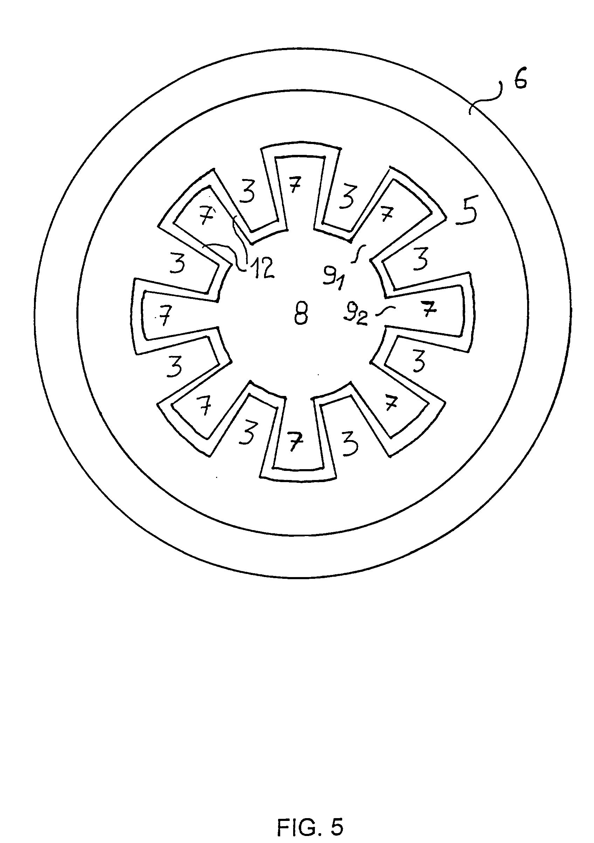

La figure 5 présente un schéma simplifié d'une coupe de l'actionneur. Elle montre plus particulièrement que les plaques 3 et Ides dents 7 sont disposées radialement de manière alternée dans une même matrice de forme tubulaire qui, dans le cadre de cette coupe, se réduit à une couronne délimitée par chacune des bases des plaques 3 et des dents 7. Elle montre aussi l'alternance des dents 7 de la branche 9₁ et des dents 7 de la branche 9₂. Enfin les surfaces latérales des dents 7 sont séparées des surfaces latérales des plaques 3 par un entrefer 12.

Il est évident que de nombreuses modifications peuvent être apportées au mode de réalisation présenté. Ainsi, l'actionneur décrit est du type monophasé. Cependant, il peut être facilement réalisé un actionneur polyphasé, avec n phases, en disposant, le long du piston plusieurs éléments statoriques d'excitation déphasée de T/n, T étant la période du courant d'alimentation et n le nombre de phases .

Dans une telle configuration, chaque élément statorique doit avoir le même pas, le pas de l'actionneur, qui est aussi le pas du piston. Cependant, la position des éléments statoriques doit être telle que, par rapport aux dents du piston, lorsque les aimants du premier élément statorique coïncident, ceux du deuxième élément statorique sont décalés de p/n, p étant le pas de l'actionneur, ceux de l'éventuel troisième élément statorique étant décalés de 2p/n etc...

De plus, dans l'exemple de réalisation précédemment décrit, le piston était entièrement passif, les éléments sources de champ magnétique, qu'il soit induit comme la bobine ou inducteur comme les aimants, sont tous dans le stator.

Or, il est aisé de réaliser un actionneur dans lequel les aimants sont dans les plaques du piston au lieu d'être dans le stator, le principe de structure à symétrie cylindrique, avec un piston en forme d'étoile munie de branches dentées, et avec un stator muni de plaques entre lesquelles coulisse le piston, les plaques étant entourées d'un bobinage, restant le même. La différence résidant dans le fait que les plaques non ferromagnétiques du stator munies d'aimants sont remplacées par des dents ferromagnétiques.

On voit aussi qu'un actionneur selon l'invention peut fonctionner comme un accélérateur du piston, ce dernier pouvant alors devenir un projectile. Dans ces conditions l'actionneur constitue un lanceur électrique dont l'accélération est conditionnée par l'ordre d'allumage des phases des éléments statoriques.

## Revendications

1. Actionneur linéaire électrique synchrone à réluctance variable, du type comprenant un stator (1) et un piston (2), tout deux comportant des plaques, respectivement (3) et (9), ces plaques (3; 9) comportant chacune principalement deux faces latérales et une face supérieure disposées parallèlement au sens de déplacement du piston, ces plaques étant disposées radialement et inscrites respectivement dans une première et une seconde matrice, **caractérisé en ce que** les première et deuxième matrices comportent une partie commune de forme tubulaire dans laquelle les plaques (3) et (9) sont disposées de manière alternée et les surfaces latérales des plaques du piston sont séparées des surfaces latérales des plaques (3) du stator par un entrefer (12).

2. Actionneur linéaire électrique synchrone à réluctance variable hybride, du type comprenant un stator (1) et un piston (2), tout deux comportant des plaques, respectivement (3) et (9), disposées parallèlement au sens de déplacement du piston, les unes des plaques (3) ou (9) étant ferromagnétiques et fractionnées chacune dans le sens longitudinal en dents (7) avec un pas déterminé p, les autres étant non ferromagnétiques et comportant des aimants (15) régulièrement répartis, les plaques (3) alternant avec les plaques (9), **caractérisé en ce que** les plaques du stator, et du rotor sont disposées selon une géométrie cylindrique, les surfaces latérales des dents (7) étant séparées des surfaces latérales des plaques non ferromagnétiques adjacentes par un entrefer (12).

3. Actionneur linéaire électrique synchrone à réluctance variable hybride selon la revendication 2, **caractérisé en ce que** les plaques (3) et (9) sont disposées selon une matrice (4) de forme tubulaire.

4. Actionneur selon l'une quelconque des revendications 2 et 3, **caractérisé en ce que** la polarité des aimants (15) d'un même coté d'une plaque les renfermant est alternée et, pour chacun d'entre eux normale au plan longitudinal de cette plaque, les aimants de même polarité étant disposés selon un pas égal à p.

5. Actionneur selon l'une des revendications 2 à 4, **caractérisé en ce que** le piston (2) comporte un axe (8) en matériau amagnétique portant des plaques ferromagnétiques dentées (7), le stator comportant un enroulement (5) et des plaques (3) non ferromagnétiques, alternant avec les plaques ferromagnétiques (9) et comportant des aimants (15) régulièrement répartis.

6. Actionneur selon la revendication 5, **caractérisé en ce que** les dents (7) d'une branche (9₁) du piston sont décalées par rapport aux dents (7) des branches adjacentes (9₂) du piston.

7. Actionneur selon la revendication 6, **caractérisé en ce que** le stator comporte n éléments statoriques décalés dans le sens longitudinal de p/n et dont l'alimentation des enroulements est déphasée de T/n, T étant la période du courant d'alimentation.

8. Actionneur selon l'une quelconque des revendications 1 à 8, **caractérisé en ce qu'**il comporte des moyens de guidage du piston en translation et en rotation.

9. Actionneur selon la revendication 8, **caractérisé en ce que** les moyens de guidage comportent au moins un bras solidaire du piston (2), et des roulements à billes solidarisés au stator 1 par des moyens de supportage.

10. Actionneur selon l'une quelconque des revendications 1 à 4, **caractérisé en ce que** le stator (1) comporte un enroulement (5) et des plaques (3) ferromagnétiques dentées et **en ce que** le piston (2) comporte des plaques (9) non ferromagnétiques, alternant avec les plaques ferromagnétiques (3) et comportant des aimants (15) régulièrement répartis.

11. Actionneur selon l'une quelconque des revendications 1 à 10, **caractérisé en ce qu'**il est appliqué à un lanceur électrique, le piston constituant alors un projectile.

## Claims

1. Synchronous electric linear actuator with variable reluctance, of the type comprising a stator (1) and a piston (2), both comprising plates, respectively (3) and (9), these plates (3; 9) each comprising chiefly two lateral surfaces and an upper surface, which are arranged parallel to the direction of displacement of the piston, these plates being arranged radially, and inserted respectively in a first and a second matrix, **characterised in that** the first and second matrices comprise a common part with a tubular shape, with the plates (3) and (9) being arranged in an alternating manner, and the lateral surfaces of the plates of the piston being separated from the lateral surfaces of the plates (3) of the stator by a gap (12).

2. Synchronous electric linear actuator with hybrid variable reluctance, of the type comprising a stator (1) and a piston (2), both comprising plates, respectively (3) and (9), which are arranged parallel to the direction of displacement of the piston, some of the plates (3) or (9) being ferromagnetic, and each divided in the longitudinal direction into teeth (7) with a pre-determined pitch p, and the others not being ferromagnetic, and comprising magnets (15) which are regularly distributed, the plates (3) alternating with the plates (9), **characterised in that** the plates of the stator and of the rotor are arranged according to a cylindrical geometry, the lateral surfaces of the teeth (7) being separated from the lateral surfaces of the adjacent, non-ferromagnetic plates, by a gap (12).

3. Synchronous electric linear actuator with variable reluctance according to claim 2, **characterised in that** the plates (3) and (9) are arranged according to a matrix (4) with a tubular shape.

4. Actuator according to claim 2 or claim 3, **characterised in that** the polarity of the magnets (15) on the same side of a plate which contains the magnets alternates, and for each of them is perpendicular to the longitudinal plane of this plate, the elements with the same polarity being disposed according to a pitch which is equal to p.

5. Actuator according to any one of claims 2 to 4, **characterised in that** the piston (2) comprises a shaft (8) made of non-magnetic material, which supports toothed ferromagnetic plates (7), the stator comprising a winding (5) and non-ferromagnetic plates (3) which alternate with the ferromagnetic plates (9), and comprise regularly distributed magnets (15).

6. Actuator according to claim 5, **characterised in that** the teeth (7) of one branch (9₁) of the piston are offset relative to the teeth (7) of the adjacent branches (9₂) of the piston.

7. Actuator according to claim 6, **characterised in that** the stator comprises n stator elements, which are offset in the longitudinal direction by p/n, and the supply to the windings of which is dephased by T/n, T being the period of the supply current.

8. Actuator according to any one of claims 1 to 8, **characterised in that** it comprises means for guiding the piston in translation and in rotation.

9. Actuator according to claim 8, **characterised in that** the means for guiding comprise at least one arm which is integral with the piston (2), and ball bearings which are rendered integral with the stator (1) by support means.

10. Actuator according to any one of claims 1 to 4, **characterised in that** the stator (1) comprises a winding (5) and toothed ferromagnetic plates (3), and **in that** the piston (2) comprises non-ferromagnetic plates (9), which alternate with the ferromagnetic plates (3), and comprise regularly distributed magnets (15).

11. Actuator according to any one of claims 1 to 10, **characterised in that** it is fitted to an electric launcher, the piston thus constituting a projectile.

## Patentansprüche

1. Synchroner elektrischer linearer Aktuator mit variabler Reluktanz des Typs, der einen Stator (1) und einen Kolben (2) umfaßt, wovon beide Platten (3) bzw. (9) aufweisen, wobei diese Platten (3; 9) insbesondere jeweils zwei Seitenflächen und eine obere Fläche besitzen, die parallel zur Verschiebungsrichtung des Kolbens angeordnet sind, wobei diese Platten radial angeordnet sind und in eine erste bzw. eine zweite Matrix eingeschrieben sind, **dadurch gekennzeichnet, daß** die erste und die zweite Matrix einen gemeinsamen rohrförmigen Abschnitt aufweisen, in dem die Platten (3) und (9) abwechselnd angeordnet sind und die Seitenflächen der Platten des Kolbens von den Seitenflächen der Platten (3) des Stators durch einen Luftspalt (12) getrennt sind.

2. Synchroner elektrischer linearer Aktuator mit hybrider variabler Reluktanz des Typs, der einen Stator (1) und einen Kolben (2) umfaßt, die beide Platten (3) bzw. (9) aufweisen, die zur Verschiebungsrichtung des Kolbens parallel angeordnet sind, wobei die einen der Platten (3) oder (9) ferromagnetisch sind und in Längsrichtung in Zähne (7) mit vorgegebener Schrittweite p unterteilt sind, während die anderen nicht ferromagnetisch sind und regelmäßig verteilte Magneten (15) enthalten, wobei die Platten (3) mit den Platten (9) abwechseln, **dadurch gekennzeichnet, daß** die Platten des Stators und des Rotors in einer zylindrischen Geometrie angeordnet sind, wobei die Seitenflächen der Zähne (7) von den Seitenflächen der benachbarten, nicht ferromagnetischen Platten durch einen Luftspalt (12) getrennt sind.

3. Synchroner elektrischer linearer Aktuator mit hybrider variabler Reluktanz nach Anspruch 2, **dadurch gekennzeichnet, daß** die Platten (3) und (9) in einer rohrförmigen Matrix (4) angeordnet sind.

4. Aktuator nach einem der Ansprüche 2 und 3, **dadurch gekennzeichnet, daß** die Polarität der Magneten (15) derselben Seite einer sie umgebenden Platte abwechselt und daß die Magneten derselben Polarität für jeden von ihnen senkrecht zur longitudinalen Ebene dieser Platte in einer Schrittweite, die gleich p ist, angeordnet sind.

5. Aktuator nach einem der Ansprüche 2 bis 4, **dadurch gekennzeichnet, daß** der Kolben (2) eine Welle (8) aus nichtmagnetischem Material enthält, die die gezahnten ferromagnetischen Platten (7) trägt, wobei der Stator eine Wicklung (5) und die nicht ferromagnetischen Platten (3), die mit den ferromagnetischen Platten (9) abwechseln und regelmäßig verteilte Magneten (15) enthalten, umfaßt.

6. Aktuator nach Anspruch 5, **dadurch gekennzeichnet, daß** die Zähne (7) eines Zweigs (9₁) des Kolbens in bezug auf die Zähne (7) benachbarter Zweige (9₂) des Kolbens versetzt sind.

7. Aktuator nach Anspruch 6, **dadurch gekennzeichnet, daß** der Stator n Statorelemente enthält, die in Längsrichtung um p/n versetzt sind und für die die Speisung der Wicklungen um T/n phasenverschoben ist, wobei T die Periode des Versorgungsstroms ist.

8. Aktuator nach einem der Ansprüche 1 bis 8, **dadurch gekennzeichnet, daß** er Mittel zur translatorischen und rotatorischen Führung des Kolbens umfaßt.

9. Aktuator nach Anspruch 8, **dadurch gekennzeichnet, daß** die Führungsmittel wenigstens einen mit dem Kolben (2) verbundenen Arm und Kugellager, die mit dem Stator (1) über Unterstützungsmittel verbunden sind, umfassen.

10. Aktuator nach einem der Ansprüche 1 bis 4, **dadurch gekennzeichnet, daß** der Stator (1) eine Wicklung (5) und gezahnte ferromagnetische Platten (3) umfaßt und daß der Kolben (2) nicht ferromagnetische Platten (9), die mit den ferromagnetischen Platten (3) abwechseln und regelmäßig verteilte Magneten (15) umfassen, enthält.

11. Aktuator nach einem der Ansprüche 1 bis 10, **dadurch gekennzeichnet, daß** er auf eine elektrische Abschußvorrichtung angewendet wird, wobei der Kolben dann ein Projektil bildet.
